# FASCICULE DE BREVET EUROPEEN

(11) **EP 1 052 131 B1**
(45) Date de publication et mention de la délivrance du brevet: **08.01.2003**
(21) Numéro de dépôt: 00401269.6
(22) Date de dépôt: 09.05.2000
(51) Int. Cl.: B60K 15/04

(54) **Système de détection de la présence du bouchon d'un réservoir de véhicule automobile**
Anordnung zur Erfassung der Anwesenheit eines Kraftfahrzeugtankdeckels
Device for detecting the presence of a tank cap of a motor vehicle

(30) Priorité: 14.05.1999 FR 9906171
(43) Date de publication de la demande: 15.11.2000
(73) Titulaire: Peugeot Citroen Automobiles SA, 92200 Neuilly sur Seine (FR)
(72) Inventeur: Chandebois, Michael, 93420 Villepinte (FR)
(74) Mandataire: Habasque, Etienne Joel Jean-François

(56) Documents cités:
- EP-A- 0 044 654
- EP-A- 0 838 361

## Description

La présente invention concerne un système de détection de la présence/absence d'un bouchon en position d'obturation d'un orifice de remplissage d'un réservoir d'un véhicule automobile.

On connaît déjà dans l'état de la technique, des systèmes de détection de ce type qui comportent des moyens de détection par variation d'impédance, de la présence ou de l'absence du bouchon, raccordés par un circuit de transmission de signaux à des moyens d'analyse des signaux de sortie de ceux-ci pour détecter la présence ou l'absence du bouchon.

Ces systèmes ont été développés dans l'état de la technique pour permettre d'avertir un utilisateur du véhicule et en particulier le conducteur de celui-ci, de la présence ou non du bouchon en position correcte d'obturation de l'orifice de remplissage du réservoir de carburant.

Les moyens d'analyse sont alors adaptés pour détecter la présence ou l'absence de ce bouchon en position correcte en analysant l'impédance du circuit.

En effet, cette impédance est différente selon que le bouchon est en position correcte d'obturation ou non.

Cependant, cette structure présente un certain nombre d'inconvénients notamment au niveau de la fiabilité de l'information délivrée.

En effet, une défaillance telle qu'une coupure du circuit de transmission de signaux est analysée comme étant une absence du bouchon.

Le but de l'invention est donc de résoudre ces problèmes.

A cet effet, l'invention a pour objet un système de détection de la présence/absence d'un bouchon en position d'obturation d'un orifice de remplissage d'un réservoir d'un véhicule automobile, du type comportant des moyens de détection par variation d'impédance de la présence ou de l'absence du bouchon, raccordés par un circuit de transmission de signaux à des moyens d'analyse des signaux de sortie de ceux-ci, pour détecter la présence ou l'absence du bouchon, caractérisé en ce qu'une impédance est raccordée en parallèle sur les moyens de détection et en ce que les moyens d'analyse sont adaptés pour diagnostiquer une défaillance du circuit en cas de détection d'une impédance nulle ou infinie de celui-ci.

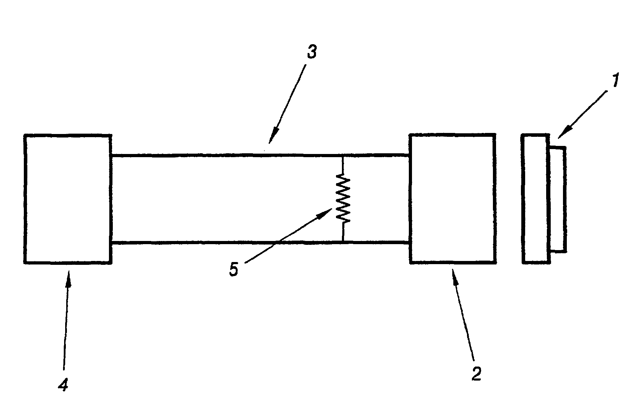

L'invention sera mieux comprise à l'aide de la description qui va suivre, donnée uniquement à titre d'exemple et faite en se référant au dessin annexé qui représente un schéma synoptique illustrant la structure générale d'un système de détection selon l'invention.

On reconnaît en effet sur cette figure, un système de détection de la présence ou de l'absence d'un bouchon en position d'obturation d'un orifice de remplissage d'un réservoir par exemple de carburant d'un véhicule automobile.

Sur cette figure, le bouchon est désigné par la référence générale 1 et l'orifice de remplissage du réservoir est associé à des moyens 2 de détection par variation d'impédance de la présence ou de l'absence de ce bouchon en position correcte d'obturation.

Ces moyens de détection sont raccordés par un circuit de transmission de signaux désigné par la référence générale 3, à des moyens d'analyse désignés par la référence générale 4, des signaux de sortie de ceux-ci pour détecter la présence ou l'absence du bouchon.

On conçoit en effet que ces moyens d'analyse sont adaptés pour détecter toute variation d'impédance au niveau des moyens de détection 2 consécutivement à la mise en place ou au retrait du bouchon 1, pour avertir un utilisateur du véhicule et en particulier le conducteur de celui-ci, de la présence ou de l'absence du bouchon.

Selon l'invention, une impédance désignée par la référence générale 5, et formée par exemple par une résistance, est raccordée en parallèle sur les moyens de détection 2 et les moyens d'analyse 4 sont adaptés pour diagnostiquer une défaillance du circuit en cas de détection d'une impédance nulle ou infinie du circuit.

En effet, le raccordement d'une telle impédance en parallèle sur les moyens de détection permet aux moyens d'analyse de détecter tout dysfonctionnement du circuit si l'impédance du système est nulle ou infinie, car dans le premier cas, cela signifie que le circuit est en court-circuit, alors que dans le second cas, cela signifie que le circuit est en circuit ouvert.

L'analyse de la présence ou de l'absence du bouchon en position d'obturation de l'orifice se fait de façon équivalente à ce qui est réalisé dans l'état de la technique, par analyse d'une variation d'impédance liée à la mise en place ou au retrait de ce bouchon.

On conçoit alors qu'une telle structure présente un certain nombre d'avantages notamment au niveau de la fiabilité de l'information délivrée à l'utilisateur.

Il va de soi bien entendu que d'autres modes de réalisation encore de ce système peuvent être envisagés dans le cadre de l'étendue des revendications.

## Revendications

1. Système de détection de la présence/absence d'un bouchon en position d'obturation d'un orifice de remplissage d'un réservoir d'un véhicule automobile, du type comportant des moyens (2) de détection par variation d'impédance de la présence ou de l'absence du bouchon (1), raccordés par un circuit de transmission de signaux (3) à des moyens d'analyse (4) des signaux de sortie de ceux-ci, pour détecter la présence ou l'absence du bouchon, **caractérisé en ce qu'**une impédance (5) est raccordée en parallèle sur les moyens de détection (2) et **en ce que** les moyens d'analyse (4) sont adaptés pour diagnostiquer une défaillance du circuit en cas de détection d'une impédance nulle ou infinie de celui-ci.

2. Système selon la revendication 1, **caractérisé en ce que** ladite impédance est formée par une résistance (5).

## Patentansprüche

1. System zum Erfassen der An- oder Abwesenheit eines Verschlusses an der Schließstelle einer Einfüllöffnung eines Kraftfahrzeugtanks, wobei das System eine auf einer Impedanzänderung beruhende Einrichtung (2) zum Erfassen der An- oder Abwesenheit des Verschlusses (1) aufweist, welche durch einen Signalübertragungsstromkreis (3) mit einer Einrichtung (4) zur Analyse der Ausgangssignale der Erfassungseinrichtung verbunden ist, um die An- oder Abwesenheit des Verschlusses zu erfassen, **dadurch gekennzeichnet, dass** der Erfassungseinrichtung (2) eine Impedanz (5) parallelgeschaltet ist und dass die Analyseeinrichtung (4) ausgebildet ist, einen Fehler des Stromkreises zu diagnostizieren, wenn eine Impedanz Null oder Unendlich des Stromkreises erfasst wird.

2. System nach Anspruch 1, **dadurch gekennzeichnet, dass** die Impedanz durch einen Widerstand (5) gebildet ist.

## Claims

1. System for detecting the presence/absence of a cap in a position blocking an orifice for filling a tank of a motor vehicle, of the type comprising means (2) for detecting, by variation of impedance, the presence or the absence of the cap (1), which means are connected by a circuit (3) for transmitting signals to means (4) for analysing signals output therefrom, in order to detect the presence or the absence of the cap, **characterized in that** an impedance (5) is connected in parallel to the detecting means (2) and **in that** the analysis means (4) are suitable for diagnosing a circuit failure in the case of detecting a zero or infinite impedance thereof.

2. System according to Claim 1, **characterized in that** the said impedance is formed by a resistor (5).
